# EUROPÄISCHE PATENTSCHRIFT

(11) **EP 1 373 688 B1**
(45) Veröffentlichungstag und Bekanntmachung des Hinweises auf die Patenterteilung: **23.06.2010**
(21) Anmeldenummer: 02716077.9
(22) Anmeldetag: 23.01.2002
(51) Int. Cl.: F01L 1/02

(54) **BRENNKRAFTMASCHINE MIT EINEM ZYLINDERKURBELGEHÄUSE**
INTERNAL COMBUSTION ENGINE COMPRISING A CYLINDER CRANKCASE
MOTEUR A COMBUSTION INTERNE A CARTER DE VILEBREQUIN DE CYLINDRE

(30) Priorität: 17.02.2001 DE 10107534
(43) Veröffentlichungstag der Anmeldung: 02.01.2004
(73) Patentinhaber: Dr. Ing. h.c. F. Porsche AG, 70435 Stuttgart (DE)
(72) Erfinder: GSCHWINDT, Werner, 75447 Sternenfels (DE); WASSERBACH, Thomas, 75210 Keltern (DE)
(86) Internationale Anmeldenummer: PCT/EP2002/000630
(87) Internationale Veröffentlichungsnummer: WO 2002/066795

(56) Entgegenhaltungen:
- EP-A- 0 590 453
- US-A- 4 607 601

## Beschreibung

Die Erfindung betrifft eine Brennkraftmaschine mit einem Zylinderkurbelgehäuse nach dem Oberbegriff des Patentanspruchs 1.

Aus der JP 8 - 200088 A ist ein Steuerkettenkasten für eine Brennkraftmaschine bekannt, der eine innere Rippenstruktur aufweist, durch die u. a. ein zur Kurbelwelle gerichteter Ölführungskanal gebildet wird, mit dessen Hilfe das im Kettenkasten umherspritzende Öl gesammelt wird.

In der US 4,607,601 A ist eine Brennkraftmaschine beschrieben, die eine Zylinderbankreihe aufweist, an deren Stirnseite in einem Steuertriebdeckel mehrere Rippen vorgesehen sind, die gerade ausgebildet sind.

Aufgabe der Erfindung ist es, für eine Brennkraftmaschine mit vorzugsweise V-förmig zueinander angeordneten Zylindern Mittel vorzusehen, durch die das durch eine Steuerkette für den Nockenwellenantrieb mitgeführte Schmieröl gezielt zur Ölwanne der Brennkraftmaschine zurückgeführt wird.

Die Aufgabe der Erfindung wird durch die im Anspruch 1 angegebenen Merkmale gelöst.

Durch die erfindungsgemäße Verrippung wird an mehreren Stellen innerhalb des Steuerkettenkastens ein Teil des durch die Steuerkette in Richtung der Zylinderköpfe mitgeführten Schmieröls abgestreift und gezielt zur Ölwanne der Brennkraftmaschine zurückgeführt. Durch die kontrollierte Abscheidung des Schmieröls kann u.a. der Querschnitt im Steuerkettenkasten für das Abströmen der Kurbelgehäusegase, den sog. blow-by-Gasen freigehalten werden.

Durch die in den Unteransprüchen angegebenen Maßnahmen sind weitere vorteilhafte Ausgestaltungen und Verbesserungen der erfindungsgemäßen Brennkraftmaschine möglich.

Durch eine u-förmig ausgebildete Umlenkschiene wird der zwischen den beiden Zylinderköpfen und oberhalb der Kurbelwelle verlaufende Steuerkettentrum dicht entlang einer Hauptrippe geführt. Das von der Steuerkette mitgeführte Schmieröl wird auf der Hauptrippe entlang bis zu einer im Scheitelbereich der Hauptrippe angeordneten Ölrücklauföffnung mitgeführt, bevor es über die Rücklauföffnung in die Ölwanne der Brennkraftmaschine zurück gelangt.

Links und rechts von der Hauptrippe schließt sich jeweils eine aus mehreren Teilrippen bestehende Verrippungsstruktur an, bei der einzelne Teilrippen als Ölleitkanal oder zum Abstreifen des von der Steuerkette mitgeführten Schmieröls dienen.

Die Verrippung ist in vorteilhafter Weise auf der Innenseite des Steuertriebdeckels angeordnet und trägt somit gleichzeitig zur Versteifung des Steuertriebdeckels bei.

In der Zeichnung wird ein Ausführungsbeispiel der Erfindung gezeigt, das nachstehend näher beschrieben ist.

Es zeigen:

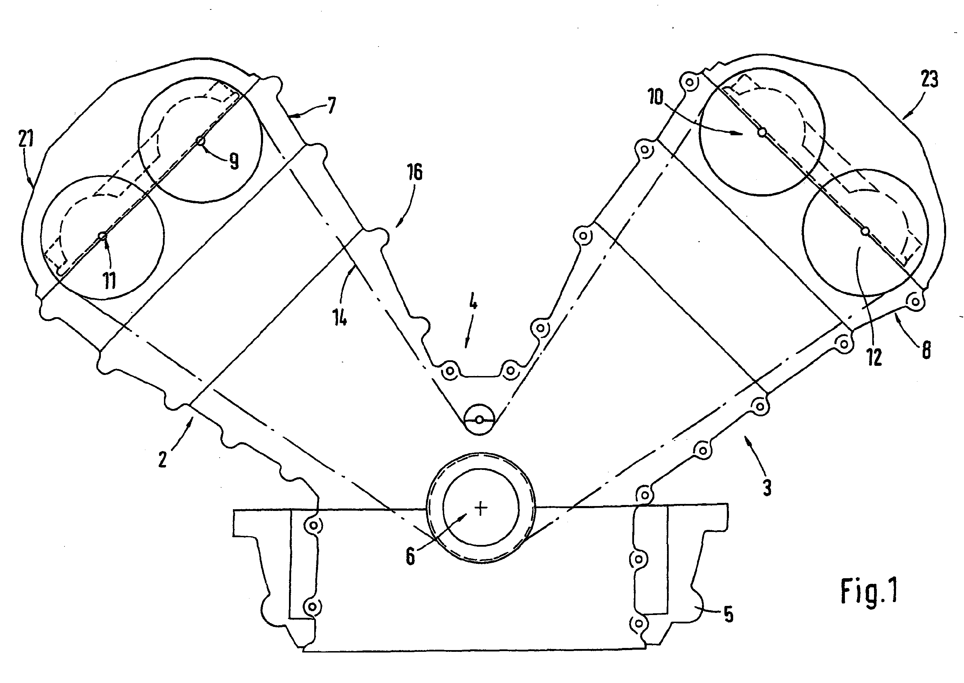

Fig. 1 eine Stirnansicht der Brennkraftmaschine,
Fig. 2 eine Ansicht auf den Steuertrieb der Brennkraftmaschine und

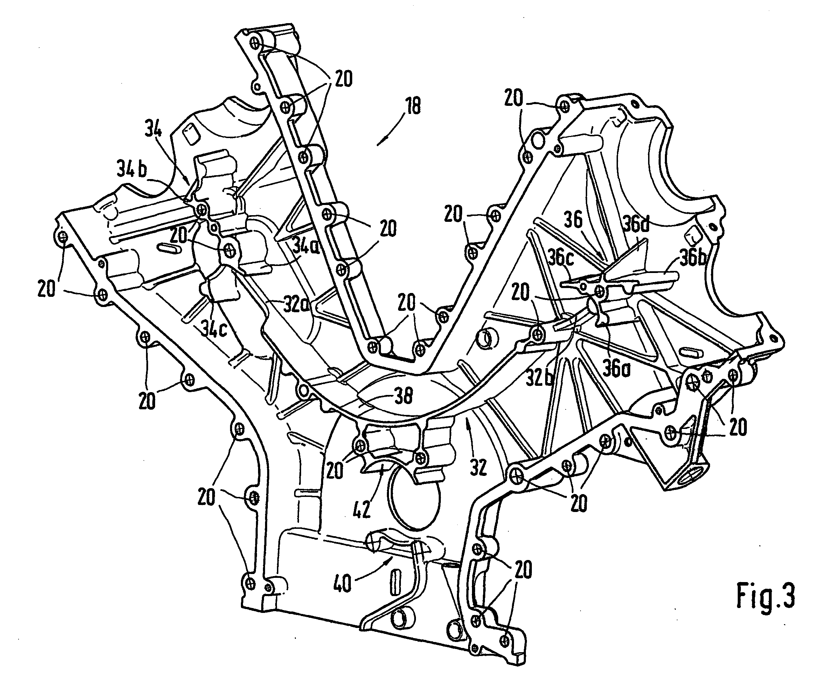

Fig. 3 eine Perspektivansicht auf den Steuertriebdeckel der Brennkraftrnaschine.

### Beschreibung des Ausführungsbeispiels

Eine Brennkraftmaschine mit mehreren Zylindern weist zwei V-förmig gegenüberliegende Zylinderbankreihen 2 und 3 auf. Die beiden Zylinderbankreihen 2 und 3 sind in einem Kurbelgehäuseoberteil 4 integriert, an das sich ein als Kurbelwellenlagerbrücke ausgestaltetes Kurbelgehäuseunterteil 5 anschließt. Zwischen dem Kurbelgehäuseoberteil 4 und dem Kurbelgehäuseunterteil 5 ist eine Kurbelwelle 6 gelagert. Die beiden Zylinderbankreihen 2 und 3 weisen zwei Zylinderköpfe 7 und 8 auf, in denen u. a. die zur Steuerung der Ein- bzw. Auslassventile vorgesehenen Einlassnockenwellen 9 und 10 sowie Auslassnockenwellen 11 und 12 aufgenommen sind. Die Einlassnockenwellen 9, 10 und die Auslassnockenwellen 11,12 werden über ein auf der Kurbelwelle 6 angeordnetes Antriebs - Doppelzahnrad und einer als Endlostrieb ausgebildeten Steuerkette 14, einer sog. Duplexkette, angetrieben. Der Steuerantrieb für die Nockenwellen ist an einer Stirnseite 16 der Gehäusestruktur der Brennkraftmaschine angeordnet, der im Wesentlichen vollständig von einem Steuertriebdeckel 18 abgeschlossen ist; letzterer ist am Kurbelgehäuseoberteil 4 und am Kürbelgehäuseunterteil 5 verschraubt. Dafür sind am Steuertriebdeckel 18 Halteaugen 20 vorgesehen, in denen im montierten Zustand nicht dargestellte Befestigungsschrauben Aufnahme finden. Beide Zylinderköpfe 7 und 8 werden nach oben hin durch jeweils einen Zylinderkopfdeckel 21 und 23 abgeschlossen.

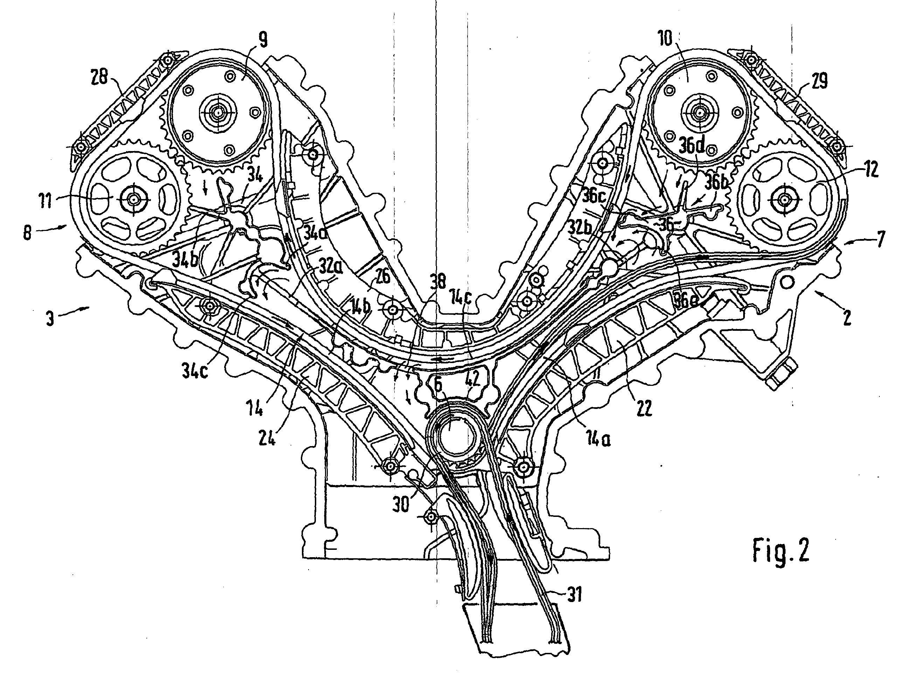

Wie in Fig. 2 dargestellt, wird die Steuerkette 14 durch mehrere Gleit - bzw. Führungsschienen begrenzt. Dazu ist in der linken Zylinderbankreihe 2 der zur Auslassnockenwelle 12 hochlaufende Lostrum 14a der Steuerkette 14 von einer Spannschiene 22 beaufschlagt, während in der rechten Zylinderbankreihe 3 der über die Auslassnockenwelle 11 zur Kurbelwelle 6 führende Lasttrum 14b der Steuerkette 14 von einer Gleitschiene 24 begrenzt ist. Der von der Einlassnockenwelle 10 der Zylinderbankreihe 2 zur Einlassnockenwelle 9 der Zylinderbankreihe 3 führende Innentrum 14c der Steuerkette 14 wird von einer u-förmig ausgebildeten Umlenkschiene 26 begrenzt bzw. geführt. Zwei weitere Führungsschienen 28 und 29 für die Steuerkette 14 sind oberhalb der Einlassnockenwelle 9 und der Auslassnockenwelle 11 bzw. oberhalb der Einlassnockenwelle 10 und der Auslassnockenwelle 12 vorgesehen.

Auf der Kurbelwelle 6 ist ein weiteres Antriebszahnrad 30 vorgesehen, das über eine Antriebskette 31 mit einem nicht dargestellten Antriebszahnrad einer in der Ölwanne der Brennkraftmaschine angeordneten Ölpumpe verbunden ist.

Im Betrieb der Brennkraftmaschine besteht das Problem, dass über die Antriebskette 31 und die Steuerkette 14 aus der Ölwanne der Brennkraftmaschine Schmieröl mitgeführt und in die Zylinderköpfe 7 und 8 gefördert wird und dass ein Teil des Schmieröls in dem durch den Steuertriebdeckel 18 begrenzten Steuerkettenkasten umherwirbelt. Eine gewisse Schmierung der Antriebsketten 14 und 31 sowie der Nockenwellenzahnräder ist durchaus erwünscht, jedoch führt eine zu große Schmierölmenge im Steuertrieb dazu, dass beispielsweise der für das Abströmen der Kurbelgehäusegase notwenige freie Querschnitt im Steuerkettenkasten nicht mehr zur Verfügung steht.

Zur gezielten Ölabscheidung bzw. Ölrückhaltung des insbesondere durch die Steuerkette 14 mitgeführten Schmieröls ist im Steuertriebdeckel 18 eine innere Rippenstruktur vorgesehen, mit der eine gezielte Ölabscheidung und damit eine Schmierölführung im Steuerkettenkasten der Brennkraftmaschine möglich ist. Dazu ist auf der Innenseite des Steuertriebdeckels 18 eine Hauptrippe 32 vorgesehen, die sich innerhalb der als Endlostrieb ausgebildeten Steuerkette 14 bogenförmig in Richtung der Zylinderköpfe 7 und 8 erstreckt. Die Hauptrippe 32 wird in Richtung der beiden Zylinderköpfe 7 und 8 durch einen sich in der Stegbreite verjüngenden Rippenabschnitt 32a und 32b fortgeführt, an dem sich in Richtung der Nockenwellen-Zahnräder eine aus mehreren Teilrippen 34a bis 34c und 36a bis 36c bestehende Verrippungsstruktur 34 und 36 anschliesst, deren Funktionsweise nachfolgend noch näher erläutert wird. Für die Ölrückführung weist die Hauptrippe 32 in ihrem Scheitelbereich eine SchmierölRücklauföffnung 38 auf.

Über die Ölpumpen- Antriebskette 31 wird in der Ölwanne der Brennkraftmaschine befindliches Schmieröl in den Steuertrieb der Brennkraftmaschine gefördert. Aufgrund der Laufrichtung der Steuerkette 14 wird ein Großteil dieses Motorschmieröls über den Lostrum 14a der Steuerkette 14 in Richtung des Zylinderkopfes 7 gefördert. Ein Teil des mit der Steuerkette 14 mitgeführten Schmieröls wird jedoch an der Teilrippe 36a "abgehobelt" und wie anhand der Pfeile dargestellt, im Bereich des Rippenabschnitts 32b auf den Innentrum 14c der Steuerkette 14 umgelenkt und mitgeführt, um dann auf der Hauptrippe 32 abtropfen bzw. abfliessen zu können. Das Schmieröl läuft dann auf der Hauptrippe 32 bis zur Schmierölrücklauföffnung 38 und gelangt von dort aus in den Ölsumpf bzw. in die Ölwanne der Brennkraftmaschine zurück.

Der nicht durch die Teilrippe 36a abgestreifte Teil des Schmieröls kann insbesondere zur Schmierölversorgung der Nockenwellenzahnräder der Nockenwellen 10 und 12 genutzt werden. Das von den Nockenwellenzahnrädern abtropfende Schmieröl wird dabei, wie anhand der Pfeile dargestellt, von den Teilrippen 36b und 36c aufgefangen, so dass auch dieser Teil des Schmieröls über den Innentrum 14c der Steuerkette 14 zur Hauptrippe 32 geführt wird. Die Stegbreite der lediglich zur Versteifung des Steuertriebdeckels 18 dienenden Teilrippe 36d verjüngt sich in Richtung der dem Steuertriebdeckel 18 gegenüber liegenden Kurbelgehäusewand, so dass, wie anhand des Pfeils dargestellt, bei einer der entgegen der Fahrtrichtung geneigt eingebauten Lage der Brennkraftmaschine das auf der Teilrippe 36b abfließende Schmieröl über die Rippe 36d zur Teilrippe 36c gelangt. Von dort aus wird es, wie bereits erläutert, über den Innentrum 14c der Steuerkette 14 zur Hauptrippe 32 geführt und kann dann ebenfalls über die Rücklauföffnung 38 in die Ölwanne abfliessen.

Auf der anderen Seite des Steuertriebdeckels 18 wird in analoger Weise über die Teilrippe 34a das in Richtung des Zylinderkopfes 8 über den Innentrum 14c der Steuerkette 14 mitgeführte Schmieröl "abgehobelt" und im Bereich des Rippenabschnitts 32a durch die bogenförmig verlaufende Teilrippe 34c auf den in Richtung der Kurbelwelle 6 nach unten laufenden Lasttrum 14b der Steuerkette 14 umgelenkt. Das von den Nockenwellen- Zahnrädern der Nockenwellen 9 und 11 abtropfende Schmieröl wird durch die Teilrippe 34b aufgefangen und kann dann ebenfalls gezielt auf den Lasttrum 14b der Steuerkette 14 abtropfen.

Eine unterhalb der Kurbelwellenlagerung angeordnete Ölleitrippe 40 sorgt dafür, dass in diesem Bereich befindliches Schmieröl in die Ölwanne der Brennkraftmaschine abgeleitet wird und nicht auf den Lostrum 14a der Antriebskette 31 gelangt.

Eine oberhalb der Kurbelwellenlagerung im Steuertriebdeckel 18 vorgesehene Führungsrippe 42 sorgt für eine Abschirmung des Steuerketten- und Ölpumpen-Antriebszahnrades.

Durch die aufgeführten Maßnahmen wird der Ölnebel im Steuerkettenkasten reduziert und damit die Entlüftung des Kurbelgehäuses von Blowby- Gasen erleichtert.

## Patentansprüche

1. Brennkraftmaschine mit einem Zylinderkurbelgehäuse und einer Gehäusestruktur, die zwei V-förmig zueinander angeordnete Zylinder oder Zylinderbankreihen aufweist, an deren Stirnseite sich ein eine Steuerkette umfassender Endlostrieb zum Verbinden einer Kurbelwelle mit in den Zylinderköpfen angeordneten Nockenwellen erstreckt, wobei die Steuertriebkette von einem Steuertriebdeckel abgedeckt ist, wobei der Steuertriebdeckel (18) oder die dem Steuertriebdeckel gegenüber liegende Gehäusestruktur eine Verrippung (32, 34, 36) aufweist, über die eine gezielte Abscheidung und Rückführung des durch die Steuerkette (14) in Richtung der Zylinderköpfe (7, 8) mitgeführten Öls erfolgt,
**dadurch gekennzeichnet, dass**
die Verrippung eine Hauptrippe (32) aufweist, die sich innerhalb der umlaufenden Steuerkette (14) bogenförmig in Richtung der Zylinderköpfe (7, 8) erstreckt, wobei mindestens eine Öl- Rücklauföffnung (38) im Scheitelbereich der Hauptrippe (32) vorgesehen ist.

2. Brennkraftmaschine nach Anspruch 1, **dadurch gekennzeichnet, dass** sich an den beiden Enden der Hauptrippe (32) eine aus mehreren Teilrippen bestehende Verrippungsstruktur (34, 36) anschließt, bei der einzelne Teilrippen (34b, 36b, 36c) als Ölleit- bzw. Ölauffangkanal für das von den Nockenwellenantriebsrädern zurücklaufende Öl dienen.

3. Brennkraftmaschine nach Anspruch 2, **dadurch gekennzeichnet, dass** einzelne Teilrippen (36a, 34a) zur Ölabstreifung vorgesehen sind.

4. Brennkraftmaschine nach einem der vorhergehenden Ansprüche, **dadurch gekennzeichnet, dass** die Verrippung (32, 34, 36) auf der Innenseite des Steuertriebdeckels (18) angeordnet ist.

## Claims

1. Internal combustion engine having a cylinder crankcase and having a housing structure which has two cylinders or cylinder bank rows arranged in a V shape with respect to one another, on the end side of which extends an endless drive which comprises a timing chain and serves for connecting a crankshaft to camshafts arranged in the cylinder heads, with the timing assembly chain being covered by a timing assembly cover, with the timing assembly cover (18) or the housing structure situated opposite the timing assembly cover having a rib formation (32, 34, 36) by means of which the oil which is entrained by the timing chain (14) in the direction of the cylinder heads (7, 8) is separated and returned in a targeted manner,
**characterized in that**
the rib formation has a main rib (32) which extends in a curved fashion within the encircling timing chain (14) in the direction of the cylinder heads (7, 8), with at least one oil return opening (38) being provided in the apex region of the main rib (32).

2. Internal combustion engine according to Claim 1, **characterized in that** the two ends of the main rib (32) are adjoined by a rib formation structure (34, 36) which is composed of a plurality of partial ribs and in which individual partial ribs (34b, 36b, 36c) serve as an oil guiding and oil collecting duct for the oil flowing back from the camshaft drive wheels.

3. Internal combustion engine according to Claim 2, **characterized in that** individual partial ribs (36a, 34a) are provided for scraping off oil.

4. Internal combustion engine according to one of the preceding claims, **characterized in that** the rib formation (32, 34, 36) is arranged on the inner side of the timing assembly cover (18).

## Revendications

1. Moteur à combustion interne à carter de vilebrequin de cylindre et structure de carter, qui présente deux cylindres ou rangées de bancs de cylindres disposés mutuellement en forme de V, sur le côté frontal desquels s'étend un entraînement sans fin comprenant une chaîne de commande pour relier un vilebrequin à des arbres à cames disposés dans les culasses, la chaîne d'entraînement de commande étant recouverte par un couvercle d'entraînement de commande, le couvercle d'entraînement de commande (18) ou la structure de carter en regard du couvercle d'entraînement de commande présentant un nervurage (32, 34, 36), par le biais duquel a lieu une séparation et une recirculation ciblées de l'huile entraînée par la chaîne de commande (14) dans la direction des culasses 8),
**caractérisé en ce que**
le nervurage présente une nervure principale (32), qui s'étend à l'intérieur de la chaîne de commande périphérique (14) en forme d'arc dans la direction des culasses (7, 8), au moins une ouverture de recirculation d'huile (38) étant prévue dans la région du sommet de la nervure principale (32).

2. Moteur à combustion interne selon la revendication 1, **caractérisé en ce qu'**une structure de nervurage (34, 36) constituée de plusieurs nervures partielles se raccorde aux deux extrémités de la nervure principale (32), des nervures partielles individuelles (34b, 36b, 36c) servant de canal de guidage ou de collecte d'huile pour l'huile revenant des roues d'entraînement des arbres à cames.

3. Moteur à combustion interne selon la revendication 2, **caractérisé en ce que** des nervures partielles individuelles (36a, 34a) sont prévues pour le raclage de l'huile.

4. Moteur à combustion interne selon l'une quelconque des revendications précédentes, **caractérisé en ce que** le nervurage (32, 34, 36) est disposé du côté intérieur du couvercle d'entraînement de commande (18).
